# EUROPEAN PATENT APPLICATION

(11) **EP 4 678 604 A1**
(43) Date of publication of application: **14.01.2026**
(21) Application number: 23925920.3
(22) Date of filing: 17.07.2023
(51) Int. Cl.: C02F 9/00, C02F 1/44, C02F 103/36, C07F 9/30

(54) **METHOD FOR RESOURCEFUL TREATMENT OF PHOSPHORUS-CONTAINING WASTEWATER**

(30) Priority: 03.03.2023 CN 202310198233
(71) Applicant: HANGZHOU MEY ENVIRONMENTAL TECHNOLOGY CO., LTD., Hangzhou, Zhejiang 310051 (CN)
(72) Inventor: CHEN, Chulong, Hangzhou, Zhejiang 310051 (CN); YOU, Xiaowei, Hangzhou, Zhejiang 310051 (CN); DUAN, Guobo, Hangzhou, Zhejiang 310051 (CN)
(74) Representative: Chung, Hoi Kan
(86) International application number: PCT/CN2023/107756
(87) International publication number: WO 2024/183215

(57) **Abstract**

Provided is a method for recycling a phosphorus-containing wastewater, including the following steps: 1) subjecting the phosphorus-containing wastewater to membrane concentration until organic phosphorus in a resulting membrane concentrate is in a solid state to produce a concentrate a including solid-state organic phosphorus and a permeate a; 2) subjecting the membrane concentrate obtained in the step 1) to membrane separation to produce a concentrate b including the solid-state organic phosphorus and a permeate b including a salt, and subjecting the permeate b including the salt to evaporative crystallization to produce an industrial salt; and 3) filtering the concentrate b including the solid-state organic phosphorus to produce a filter concentrate including the solid-state organic phosphorus and a filter permeate, and drying the filter concentrate including the solid-state organic phosphorus to produce the solid-state organic phosphorus. The method for recycling a phosphorus-containing wastewater can achieve the recovery of both inorganic salts and organic phosphorus with a simple and easy-to-control process flow. The present disclosure can enhance the resource utilization efficiency, and reduce the wastewater treatment cost for enterprises.

## Description

### TECHNICAL FIELD

The present disclosure belongs to the technical field of wastewater treatment, and relates to a method for recycling a phosphorus-containing wastewater.

### BACKGROUND

In recent years, due to superior characteristics including low corrosiveness and minimal toxic substances, phosphorus-based flame retardants have emerged as important alternatives to brominated flame retardants. Phosphorus-based flame retardants demonstrate promising market application prospects. Aluminum diethylphosphinate is the most representative alkylphosphinate flame retardant with advantages such as small particle size, high whiteness, excellent thermal stability, and non-toxicity. Aluminum diethylphosphinate is widely used in flame retardant applications for thermoplastic plastics, thermosetting plastics, fibers, textiles, and other products.

During the production of aluminum diethylphosphinate, a significant amount of refractory organic wastewater is generated. Such refractory organic wastewater is characterized by a high chemical oxygen demand (COD) and a high total phosphorus content, with aluminum diethylphosphinate as the primary phosphorus component. The current treatment processes for such refractory organic wastewater primarily include oxidation, precipitation, extraction, and biochemical processes. These processes enable a harmless treatment for total phosphorus to meet the corresponding discharge standards and can further treat and recycle inorganic salts in the wastewater. However, these processes fail to recover organic phosphorus, resulting in the waste of resources (aluminum diethylphosphinate).

The patent CN108609788A discloses a treatment process for wastewater from phosphorus-based flame retardant production, including the following steps: (1) adjusting the pH of the wastewater from phosphorus-based flame retardant production to a range of 2 to 9, and producing a filtrate I by adding a soluble trivalent iron salt, followed by stirring and filtration; (2) neutralizing and flocculating the filtrate I, separating and removing precipitate to produce a filtrate II; and (3) evaporatively concentrating and crystallizing the filtrate II for desalination, wherein the evaporated condensate is directly discharged or recycled, and a concentrate is directly returned to the step (1) for a repeated treatment. The treatment process in this patent is suitable for the continuous treatment of wastewater from phosphorus-based flame retardant production, and consists primarily of an agent-based pre-treatment, neutralization and flocculation, and evaporation and condensation. This treatment process involves simple operations and a low cost and can achieve the zero discharge of wastewater from phosphorus-based flame retardant production.

The patent CN108975585A discloses a method for recycling wastewater from phosphorus-containing flame retardant production, including the following steps: (1) Wet catalytic oxidation: The wastewater from phosphorus-containing flame retardant production is subjected to wet catalytic oxidation to produce an oxidized solution. (2) Membrane separation: The oxidized solution produced in the step (1) is subjected to membrane separation to produce a membrane concentrate and a membrane permeate. (3) Crystallization: The membrane concentrate produced in the step (2) is subjected to freeze crystallization to produce an industrial phosphate salt. The membrane permeate produced in the step (2) is subjected to evaporative crystallization for desalination. The method of this patent utilizes wet catalytic oxidation as the core step, combined with membrane separation and crystallization processes to deal with the wastewater from phosphorus-containing flame retardant production. This method is simple, can effectively degrade organic phosphorus in the wastewater, and recycle salts from the wastewater, thereby achieving the goal of zero emission.

The technical solutions in the aforementioned patent all can achieve the compliant discharge of organic phosphorus-containing wastewater while enabling the recycling of inorganic salts. However, these technical solutions in the aforementioned patent do not allow the recovery of organic phosphorus, resulting in the waste of organic phosphorus resources.

### SUMMARY

The present disclosure provides a method for recycling a phosphorus-containing wastewater to address the problem that organic phosphorus in phosphorus-containing wastewater cannot be recovered to cause the waste of organic phosphorus. This method can achieve the recovery of both inorganic salts and organic phosphorus with a simple and easy-to-control process flow. The present disclosure can enhance the resource utilization efficiency, and reduce the wastewater treatment cost for enterprises.

To achieve the objective of the present disclosure, the present disclosure adopts the following technical solutions: A method for recycling a phosphorus-containing wastewater is provided, including the following steps of:
1) subjecting the phosphorus-containing wastewater to membrane concentration until organic phosphorus in a resulting membrane concentrate into a solid state, to produce a concentrate a including solid-state organic phosphorus and a permeate a;
2) subjecting the membrane concentrate produced in the step 1) to membrane separation to produce a concentrate b including the solid-state organic phosphorus and a permeate b including salts, and subjecting the permeate b including the salts to evaporative crystallization to produce an industrial salt; and
3) subjecting the concentrate b including the solid-state organic phosphorus to filtration to produce a filtered concentrate including the solid-state organic phosphorus and a filtered permeate, and subjecting the filtered concentrate including the solid-state organic phosphorus to drying to produce the solid-state organic phosphorus.

In the present disclosure, the phosphorus-containing wastewater is firstly treated through membrane concentration to cause the organic phosphorus of aluminum diethylphosphinate in the wastewater precipitated to precipitate into a solid form, and then a salt dissolved in the wastewater is separated from the solid-state aluminum diethylphosphinate through membrane separation, thereby achieving the separation and recovery of both the organic phosphorus and the salt with a simple and easy-to-control process flow.

Preferably, in the step 1), prior to the membrane concentration, the phosphorus-containing wastewater is subjected to a filtration pretreatment.

Preferably, a filtration permeate produced after the pretreatment is subjected to the subsequent membrane concentration, and a filtration concentrate produced after the pretreatment is returned to a front-end production process.

Preferably, the filtration pretreatment includes one or more of plate and frame filtration, hollow fiber membrane filtration, tubular membrane filtration, filter bag filtration, and cartridge filtration.

Preferably, a membrane adopted for the membrane concentration in the step 1) is a nanofiltration membrane and/or a reverse osmosis membrane.

Preferably, a system adopted for the membrane concentration includes at least two stages.

Preferably, a water recovery rate of the system adopted for the membrane concentration is controlled at 75% to 90%.

Preferably, the system adopted for the membrane concentration includes two or three stages, and each stage includes 3 to 6 membrane elements connected in series.

The experimental research of the present disclosure has shown that, if single-stage membrane concentration is adopted, there is an insufficient concentration factor for the organic phosphorus of aluminum diethylphosphinate, and the organic phosphorus of aluminum diethylphosphinate cannot be precipitated in a solid form from the wastewater. Therefore, the membrane concentration system of the present disclosure employs at least two stages so that the organic phosphorus of aluminum diethylphosphinate can be precipitated in a solid form.

Preferably, when the system adopted for the membrane concentration includes two stages, operating parameters are as follows: in a first stage, the water recovery rate is controlled at 50% to 60% and an operating pressure is controlled at 50 bar to 70 bar; and in a second stage, the water recovery rate is controlled at 40% to 50% and the operating pressure is controlled at 65 bar to 100 bar. Preferably, when the system adopted for the membrane concentration includes three stages, operating parameters are as follows: in a first stage, the water recovery rate is controlled at 50% to 60% and the operating pressure is controlled at 50 bar to 70 bar; in a second stage, the water recovery rate is controlled at 40% to 50% and the operating pressure is controlled at 65 bar to 100 bar; and in a third stage, the water recovery rate is controlled at 30% to 50% and the operating pressure is controlled at 70 bar to 100 bar.

Preferably, in the step 1), prior to the membrane concentration, the phosphorus-containing wastewater is subjected to pH adjustment by acid addition and/or to temperature reduction. Preferably, the pH of the phosphorus-containing wastewater is adjusted with sulfuric acid to a range to 2.0 to 2.5; and the temperature of the phosphorus-containing wastewater is reduced to a range to 20°C to 25°C. In the present disclosure, adding acid to the wastewater from the flame retardant or reducing the temperature of the wastewater from the flame retardant can improve a purity of the organic phosphorus of aluminum diethylphosphinate to some extent. Additionally, in the present disclosure, an acid added for pH reduction is preferably sulfuric acid. Sulfuric acid can react with a carbonate in the wastewater from the flame retardant to produce a sulfate, thereby enhancing a purity of recovered sodium sulfate.

Preferably, the permeate a produced in the step 1) is subjected to single-stage reverse osmosis concentration to produce a concentrate c and a permeate c; and the permeate c is directly reused or discharged or subjected to a multi-stage reverse osmosis treatment and then reused. The multi-stage reverse osmosis treatment includes, but is not limited to, two-stage reverse osmosis treatment, three-stage reverse osmosis treatment, four-stage reverse osmosis treatment, and five-stage reverse osmosis treatment, and is preferably a two-stage reverse osmosis treatment. A concentrate produced after the multi-stage reverse osmosis treatment is returned to a front end of the single-stage reverse osmosis treatment, and a permeate produced after the multi-stage reverse osmosis treatment is directly reused or discharged.

Preferably, the concentrate c is returned to a front end of the membrane concentration in the step 1), or the concentrate c is subjected to a medium-pressure reverse osmosis treatment and a high-pressure reverse osmosis treatment sequentially, or the concentrate c is subjected to a medium-pressure reverse osmosis treatment and a disc-tube reverse osmosis treatment sequentially. The high-pressure reverse osmosis treatment is preferably a spiral-wound high-pressure reverse osmosis treatment. A concentrate obatained after the high-pressure reverse osmosis treatment or the disc-tube reverse osmosis treatment is subjected to evaporative crystallization for recovering sodium sulfate. A permeate produced after the abovementioned two reverse osmosis treatments is returned to the single-stage reverse osmosis and mixed with a permeate produced after the single-stage reverse osmosis.

Preferably, a membrane adopted for the membrane separation in the step 2) is an ultrafiltration membrane and/or a loose nanofiltration membrane.

Preferably, a system adopted for the membrane separation includes one, two, or three stages, and each stage includes 2 to 4 membrane elements connected in series.

Preferably, a water recovery rate of the membrane separation is controlled at 70% to 95%.

Preferably, the permeate b including the salt is subjected to condensation treatment during the evaporative crystallization, and a resulting condensate is either reused or directly discharged.

Preferably, a molecular weight cut-off of the ultrafiltration membrane is 2 K to 100 K.

Preferably, a divalent salt permeability of the loose nanofiltration membrane is higher than or equal to 50%.

Preferably, in the step 3), before being filtered, the concentrate b including the solid-state organic phosphorus is subjected to diafiltration to produce a diafiltration concentrate and a diafiltration permeate; and the diafiltration concentrate is subjected to the filtration, and the diafiltration permeate is subjected to evaporative crystallization to produce an industrial salt. The present disclosure can significantly enhance a purity of recovered organic phosphorus through the diafiltration.

Preferably, in the step 3), the filter permeate is returned to the front-end production process.

Preferably, the filter concentrate including the solid-state organic phosphorus is subjected to a condensation treatment during drying, and a resulting condensate is either reused or directly discharged.

The present disclosure has the following beneficial effects:
1) In the present disclosure, organic phosphorus of aluminum diethylphosphinate in the wastewater is precipitated in a solid form through membrane concentration firstly, and then salts dissolved in the wastewater is separated from the solid-state aluminum diethylphosphinate through membrane separation, thereby achieving the separation and recovery of both the organic phosphorus and the salt with a simple and easy-to-control process flow. 2) The organic phosphorus of aluminum diethylphosphinate and the sodium sulfate produced after the recycling of the present disclosure have high purities.

### BRIEF DESCRIPTION OF DRAWINGS

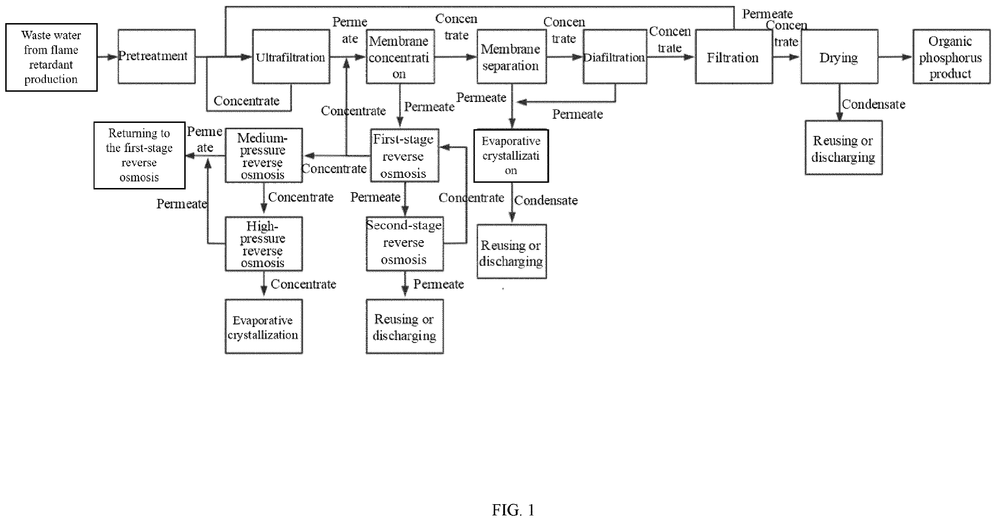

FIG. 1 is a flow chart of the method for recycling a phosphorus-containing wastewater in the present disclosure.

### DETAILED DESCRIPTION OF THE EMBODIMENTS

In order to describe the technical contents, objectives, and effects of the present disclosure in detail, the present disclosure is described below with reference to implementations.

### Example 1

A wastewater from phosphorus-containing flame retardant production in a plant had the following water quality indexes: COD content: 2,500 mg/L, total phosphorus content: 800 mg/L, salt content: 30,000 mg/L (primarily sodium sulfate), pH: 3.8, and temperature: 55°C.

According to the flow chart of the method for recycling a phosphorus-containing wastewater in the present disclosure shown in FIG. 1, the wastewater was first cooled to 25°C by a heat exchanger, and then pretreated through plate and frame filtration to remove solids. A concentrate produced after the plate and frame filtration was returned to a front-end production process, and a permeate produced after the plate and frame filtration was delivered to a subsequent membrane concentration system for further treating.

1) Membrane concentration: The permeate produced after the plate and frame filtration was directed into the membrane concentration system. The membrane concentration system included 3 stages of membrane concentration units connected in series, and had a water recovery rate of 85%. Each stage of membrane concentration unit included 4 nanofiltration membrane elements connected in series. Operating parameters set for each stage of membrane concentration unit were as follows:

The first stage: The water recovery rate was controlled at 50%, and the operating pressure was controlled at 55 bar.

The second stage: The water recovery rate was controlled at 50%, and the operating pressure was controlled at 70 bar.

The third stage: The water recovery rate was controlled at 40%, and the operating pressure was controlled at 75 bar.

The system operated under the above operating parameters until organic phosphorus in a resulting membrane concentrate was precipitated in a solid state and suspended in the membrane concentrate. A concentrate from the membrane concentration system was then delivered to a membrane separation system for subsequent separation. A permeate from the membrane concentration system was filtered with a first-stage reverse osmosis membrane to produce a first-stage reverse osmosis permeate and a first-stage reverse osmosis concentrate. The first-stage reverse osmosis concentrate was returned to a front end of the membrane concentration in the step 1), and the first-stage reverse osmosis permeate was subjected to a second-stage reverse osmosis treatment. A concentrate produced after the second-stage reverse osmosis treatment was returned to a front end of the first-stage reverse osmosis, and a permeate produced after the second-stage reverse osmosis treatment was either directly reused or discharged. It was tested that the permeate produced after the second-stage reverse osmosis treatment had a COD content of lower than 30 mg/L and an electrical conductivity of less than 50 µs/cm, which met the water quality requirements for production.

After the treatment by the nanofiltration membrane concentration system, a concentrate from the membrane concentration system (namely, the concentrate from the third stage) had the following indexes: COD content: 15,250 mg/L, total phosphorus content: 5,107 mg/L, and salt content: 166,000 mg/L. A permeate from the membrane concentration system (a mixture of permeates from the first, the second and the third stages) had the following indexes: COD content: 250 mg/L, total phosphorus content: 40 mg/L, and salt content: 6,000 mg/L.

2) Membrane separation: The concentrate from the membrane concentration system was directed into a membrane separation system to produce a membrane separation system permeate and a membrane separation system concentrate. The membrane separation system adopted a single stage including 3 ultrafiltration membrane elements connected in series. The ultrafiltration membranes had a molecular weight cut-off of 2 K. For the membrane separation system, the water recovery rate was controlled at 90% and the operating pressure was controlled at 3 bar.

The membrane separation system concentrate was subjected to diafiltration three times. For first diafiltration, water was added to the membrane concentration system concentrate at a ratio of 1:1, and a recovery rate was controlled at 50%. Second diafiltration and third diafiltration were subjected to the same process as the first diafiltration.

After the diafiltration, a diafiltration concentrate and a diafiltration permeate were produced. The diafiltration concentrate was delivered to a subsequent filtration procedure. The permeate from the membrane separation system and the diafiltration permeate were mixed and subjected to evaporative crystallization to produce industrial-grade sodium sulfate. It was tested that the sodium sulfate had a yield of 81.5% and a purity of 98.9%.

3) Filtration: The concentrate after diafiltration of the membrane separation system was subjected to plate and frame filtration. A filter permeate was returned to a front-end production process, and a filter concentrate was dried to produce a solid-state organic phosphorus product. During drying, a condensate collected through condensation was either reused or directly discharged. It was tested that the organic phosphorus product had a yield of 62.0% and a purity of 92.1%.

### Example 2

Example 2 was different from Example 1 in that the first-stage reverse osmosis concentrate was not returned to the front end of the membrane concentration in the step 1), but was treated by the following process:

The first-stage reverse osmosis concentrate was subjected to a medium-pressure reverse osmosis treatment to produce a medium-pressure reverse osmosis permeate and a medium-pressure reverse osmosis concentrate. The medium-pressure reverse osmosis concentrate was then subjected to a high-pressure spiral-wound reverse osmosis treatment to produce a high-pressure spiral-wound reverse osmosis concentrate and a high-pressure spiral-wound reverse osmosis permeate. The high-pressure spiral-wound reverse osmosis concentrate was subjected to evaporative crystallization for recovering sodium sulfate. The medium-pressure reverse osmosis permeate and the high-pressure spiral-wound reverse osmosis permeate were mixed with the first-stage reverse osmosis permeate and introduced into the subsequent first-stage reverse osmosis permeate treatment procedure.

By calculating, in the membrane concentration procedure, concentrates produced from the first-stage reverse osmosis treatment, the medium-pressure reverse osmosis treatment, and the high-pressure spiral-wound reverse osmosis treatment were subjected to evaporative crystallization. It was tested that sodium sulfate had a yield of 88.6% and a purity of 98.5%, and the organic phosphorus product had a yield of 52.1% and a purity of 91.1 %.

### Example 3

Example 3 was different from Example 2 in that the high-pressure spiral-wound reverse osmosis treatment was replaced with a disc-tube reverse osmosis treatment.

By calculating, in the membrane concentration procedure, concentrates produced from the first-stage reverse osmosis treatment, the medium-pressure reverse osmosis treatment, and the high-pressure spiral-wound reverse osmosis treatment were subjected to evaporative crystallization.

Sodium sulfate had a yield of 88.3% and a purity of 98.7%, and the organic phosphorus product had a yield of 53.2% and a purity of 90.6%.

### Example 4

Example 4 was different from Example 1 in that the wastewater was cooled by the heat exchanger to 20°C.

It was tested that sodium sulfate had a yield of 81.6% and a purity of 98.6%, and the organic phosphorus product had a yield of 65.1% and a purity of 92.4%.

### Example 5

Example 5 was different from Example 1 in that the wastewater was not cooled by the heat exchanger before being treated.

It was tested that sodium sulfate had a yield of 77.3% and a purity of 98.2%, and the organic phosphorus product had a yield of 50.2% and a purity of 82.0%.

### Example 6

Example 6 was different from Example 1 in that the step of cooling the wastewater by the heat exchanger was replaced with a step of adjusting the pH of the wastewater with sulfuric acid to 2.

It was tested that sodium sulfate had a yield of 81.5% and a purity of 98.9%, and the organic phosphorus product had a yield of 62.0% and a purity of 92.1%.

### Example 7

Example 7 was different from Example 1 in that the step of cooling the wastewater by the heat exchanger was replaced with a step of adjusting a pH of the wastewater with sulfuric acid to 2.5.

It was tested that sodium sulfate had a yield of 81.3% and a purity of 98.7%, and the organic phosphorus product had a yield of 57.3% and a purity of 91.8%.

### Example 8

Example 8 was different from Example 1 in that the wastewater from phosphorus-containing flame retardant production was directly introduced into the membrane concentration system for treating without the plate and frame filtration pretreatment step.

It was tested that sodium sulfate had a yield of 80.9% and a purity of 98.3%, and the organic phosphorus product had a yield of 59.8% and a purity of 91.6%.

### Example 9

Example 9 was different from Example 1 in that there is no diafiltration in the membrane separation step.

Membrane separation: The concentrate from the membrane concentration system was directed into a membrane separation system to produce a membrane separation system permeate and a membrane separation system concentrate. The membrane separation system had a single stage including 3 ultrafiltration membrane elements connected in series. The ultrafiltration membranes had a molecular weight cut-off of 2 K. For the membrane separation system, the water recovery rate was controlled at 90% and the operating pressure was controlled at 3 bar.

The membrane separation system concentrate was delivered to the subsequent filtration procedure. The membrane separation system permeate was subjected to evaporative crystallization to produce industrial-grade sodium sulfate.

It was tested that sodium sulfate had a yield of 81.5% and a purity of 98.6%.

Filtration: The membrane separation system concentrate was subjected to plate and frame filtration. A filtration permeate was returned to a front-end production process, and a filtration concentrate was dried to produce a solid-state organic phosphorus product. A condensate collected through condensation during drying was either reused or directly discharged.

It was tested that the organic phosphorus product had a yield of 70.4% and a purity of 55.6%.

### Example 10

Example 10 was different from Example 1 in that: A two-stage membrane concentration system was adopted in the membrane concentration step. The water recovery rate of the system was 75%. Each membrane concentration unit included 4 nanofiltration membrane elements connected in series. Operating parameters set for each membrane concentration unit were as follows:

The first stage: The water recovery rate was controlled at 50%, and the operating pressure was controlled at 55 bar.

The second stage: The water recovery rate was controlled at 50%, and the operating pressure was controlled at 70 bar.

It was tested that sodium sulfate had a yield of 83.5% and a purity of 98.3%, and the organic phosphorus product had a yield of 40.2% and a purity of 88.1%.

### Comparative Example 1

Comparative Example 1 was different from Example 1 in that a single-stage membrane concentration system was adopted in the membrane concentration step. Operating parameters were as follows: The water recovery rate was controlled at 50%, and the operating pressure was controlled at 55 bar.

It was tested that sodium sulfate had a yield of 88.4% and a purity of 95.7%, while a yield of the organic phosphorus product was zero.

### Comparative Example 2

Comparative Example 2 was different from Example 1 in that the membrane concentration was replaced with electrodialysis concentration.

It was tested that sodium sulfate had a yield of 81.5% and a purity of 98.6%, while a yield of the organic phosphorus product was zero.

The embodiments of the present disclosure have been disclosed above, but are not limited to the applications listed in the specification and implementations and can be absolutely applied to various fields suitable for the present disclosure. Additional modifications can be easily made by those skilled in the art. Therefore, without departing from the general concepts defined by the claims and equivalent scopes thereof, the present disclosure is not limited to the specific details and the embodiments described here.

## Claims

1. A method for recycling a phosphorus-containing wastewater, comprising the following steps of:
1) subjecting the phosphorus-containing wastewater to membrane concentration until organic phosphorus in a membrane concentrate into a solid state, to produce a concentrate a comprising solid-state organic phosphorus and a permeate a;
2) subjecting the membrane concentrate produced in the step 1) to membrane separation to produce a concentrate b comprising the solid-state organic phosphorus and a permeate b comprising salts, and subjecting the permeate b comprising the salts to evaporative crystallization to produce an industrial salt; and
3) subjecting the concentrate b comprising the solid-state organic phosphorus to filtration to produce a filtration concentrate comprising the solid-state organic phosphorus and a filtration permeate, and subjecting the filtration concentrate comprising the solid-state organic phosphorus to drying to produce the solid-state organic phosphorus.

2. The method for recycling the phosphorus-containing wastewater according to claim 1, wherein
in the step 1), prior to the membrane concentration, the phosphorus-containing wastewater is subjected to a filtration pretreatment;
a filter permeate produced after the pretreatment is subjected to the subsequent membrane concentration, and a filtration concentrate produced after the pretreatment is returned to a front-end production process; and
the filtration pretreatment comprises one or more of plate and frame filtration, hollow fiber membrane filtration, tubular membrane filtration, filter bag filtration, and cartridge filtration.

3. The method for recycling the phosphorus-containing wastewater according to claim 1, wherein
a membrane adopted for the membrane concentration in the step 1) is a nanofiltration membrane and/or a reverse osmosis membrane;
a system adopted for the membrane concentration comprises at least two stages; and
a water recovery rate of the system adopted for the membrane concentration is controlled at 75% to 90%.

4. The method for recycling the phosphorus-containing wastewater according to claim 3, wherein
the system adopted for the membrane concentration comprises two or three stages, and each stage comprises three to six membrane elements connected in series;
when the system adopted for the membrane concentration comprises two stages, operating parameters are as follows: in a first stage, the water recovery rate is controlled at 50% to 60% and an operating pressure is controlled at 50 bar to 70 bar; and in a second stage, the water recovery rate is controlled at 40% to 50% and the operating pressure is controlled at 65 bar to 100 bar; and
when the system adopted for the membrane concentration comprises three stages, operating parameters are as follows: in a first stage, the water recovery rate is controlled at 50% to 60% and the operating pressure is controlled at 50 bar to 70 bar; in a second stage, the water recovery rate is controlled at 40% to 50% and the operating pressure is controlled at 65 bar to 100 bar; and in a third stage, the water recovery rate is controlled at 30% to 50% and the operating pressure is controlled at 70 bar to 100 bar.

5. The method for recycling the phosphorus-containing wastewater according to claim 1, wherein
in the step 1), prior to the membrane concentration, the phosphorus-containing wastewater is subjected to pH adjustment by acid addition and/or to temperature reduction,
the pH of the phosphorus-containing wastewater is adjusted with sulfuric acid to a range of 2.0 to 2.5; and the temperature of the phosphorus-containing wastewater is reduced to a range of 20°C to 25°C.

6. The method for recycling the phosphorus-containing wastewater according to claim 1, wherein
the permeate a produced in the step 1) is subjected to first-stage reverse osmosis concentration to produce a concentrate c and a permeate c; the permeate c is directly reused or subjected to a multi-stage reverse osmosis treatment and then reused; and
the concentrate c is returned to a front end of the membrane concentration in the step 1), or the concentrate c is subjected to a medium-pressure reverse osmosis treatment and a high-pressure reverse osmosis treatment sequentially, or the concentrate c is subjected to the medium-pressure reverse osmosis treatment and a disc-tube reverse osmosis treatment sequentially.

7. The method for recycling the phosphorus-containing wastewater according to claim 1, wherein
a membrane adopted for the membrane separation in the step 2) is an ultrafiltration membrane and/or a loose nanofiltration membrane;
a system adopted for the membrane separation comprises one, two, or three stages, and each stage comprises two to four membrane elements connected in series; a water recovery rate of the membrane separation is controlled at 70% to 95%; and
the permeate b comprising the salt is subjected to condensation treatment during the evaporative crystallization, and a resulting condensate is either reused or directly discharged.

8. The method for recycling the phosphorus-containing wastewater according to claim 7, wherein
a molecular weight cut-off of the ultrafiltration membrane is 2 K to 100 K; and
a divalent salt permeability of the loose nanofiltration membrane is higher than or equal to 50%.

9. The method for recycling the phosphorus-containing wastewater according to claim 1, wherein
in the step 3), before being filtered, the concentrate b comprising the solid-state organic phosphorus is subjected to diafiltration to produce a diafiltration concentrate and a diafiltration permeate; and the diafiltration concentrate is subjected to the filtration, and the diafiltration permeate is subjected to evaporative crystallization to produce the industrial salt.

10. The method for recycling the phosphorus-containing wastewater according to claim 1, wherein
in the step 3), the filter permeate is returned to the front-end production process; and
the filter concentrate comprising the solid-state organic phosphorus is subjected to a condensation treatment during drying, and a resulting condensate is either reused or directly discharged.
